# EUROPEAN PATENT APPLICATION

(11) **EP 0 823 448 A1**
(43) Date of publication of application: **11.02.1998**
(21) Application number: 97904572.1
(22) Date of filing: 19.02.1997
(51) Int. Cl.: C08G 63/06, C08G 63/08, C08G 63/83

(54) **PROCESS FOR THE PREPARATION OF POLYHYDROXYCARBOXYLIC ACID**

(30) Priority: 23.02.1996 JP 36130/96
(71) Applicant: Kyowa Hakko Kogyo Co., Ltd., Chiyoda-ku, Tokyo 100 (JP)
(72) Inventor: YANAGISAWA, Norio, Yokkaichi-shi, Mie 510 (JP); NEZU, Tetsuya, Sakai-shi, Osaka 590 (JP); HOTTA, Koji, Ichinomiya-shi, Aichi 491 (JP); MURAYAMA, Toshikazu, Yokkaichi-shi, Mie 510 (JP); TSUZAKI, Nobuko, Yokkaichi-shi, Mie 510 (JP); KODAMA, Sai, Seto-shi, Aichi 489 (JP); MARUYAMA, Hiroshige, Yokkaichi-shi, Mie 510 (JP); YOKOMORI, Yorozu, Ichihara-shi, Chiba 290 (JP)
(74) Representative: VOSSIUS & PARTNER
(86) International application number: JP9700441
(87) International publication number: WO9731049

(57) **Abstract**

The present invention provides a process for producing polyhydroxycarboxylic acids having a weight-average molecular weight of 50,000 or above and excellent properties as biodegradable plastics by subjecting hydroxycarboxylic acids or oligomers thereof to polycondensation in the presence of an inorganic solid acid catalyst and a Lactide.

## Description

### Technical Field

The present invention relates to a process for producing polyhydroxycarboxylic acids, specifically, those having a weight-average molecular weight of 50,000 or above. Said polyhydroxycarboxylic acids are useful as biodegradable plastics for food-wrapping films, beverage bottles, drug delivery systems, etc.

### Background Art

Some methods are known for producing polyhydroxycarboxylic acids by direct dehydration polycondensation of hydroxycarboxylic acids.

For example, Japanese Published Unexamined Patent Application No. 28521/86 discloses a method for producing polymers or copolymers of lactic acid or glycolic acid having a weight-average molecular weight of 5,000 or above, usually 5,000-30,000, by subjecting lactic acid and/or glycolic acid to polycondensation reaction in the presence or absence of an inorganic solid acid catalyst such as acid clay, activated clay, bentonite, kaolin, talc, aluminum silicate, magnesium silicate, aluminum borate, or silicic acid.

However, the weight-average molecular weight of the polymers or the copolymers produced by said method is around 30,000 at most. Even polymers or copolymers of weight-average molecular weight at such level may be considered to be satisfactory in physical properties as polymers or copolymers to be used in bioabsorbable pharmaceutical compositions which are the objective of said method, but they are dissatisfactory in physical properties as biodegradable plastics.

Japanese Published Examined Patent Application No. 52930/90 discloses a method for producing polylactide having a molecular weight of at least 4,000, usually 4,000-20,000, by subjecting lactic acid to polycondensation in the absence of a catalyst at a temperature of 220-260°C and at a pressure of 10 mmHg or below.

Japanese Published Examined Patent Application No. 13963/93 discloses a method for producing polyglycolide or polylactide having a molecular weight of 8,000-11,000 by adding a phosphoric acid compound or a phosphorous acid compound when the molecular weight of lactic acid or glycolic acid reaches 2,000-6,000 during the polycondensation in the presence of a tin compound.

Japanese Published Unexamined Patent Application No. 65360/94 discloses a method for producing polyhydroxycarboxylic acids having a weight-average molecular weight of 15,000 or above, usually 5,000-200,000, by subjecting hydroxycarboxylic acids or oligomers thereof to dehydration polycondensation in a reaction mixture containing an organic solvent substantially in the absence of water.

In this method, a catalyst is not necessarily used, but the use of a catalyst can accelerate the reaction. Metals belonging to II, III, IV, and V groups of the periodic table, and oxides or salts thereof are mentioned as the catalysts. However, this method requires the complicated step of dehydrating the organic solvent which is distilled together with water formed and then returning it to the reaction system.

Polymer Preprints, Japan, Vol. 44, No. 12, p. 3146-3147 (issued on September 1, 1995) discloses a method for polycondensation of 90% L-lactic acid by the use of prepolymers (weight-average molecular weight: 10,000-50,000) synthesized in the presence of stannous chloride. In this method, the molecular weight of polymers produced can be increased by introducing lactide into the reaction system, and the polycondensation reaction can be accelerated by using a solvent such as diphenyl ether to efficiently remove the water formed.

WO 95/28432 discloses a method for producing polyhydroxycarboxylic acids having a weight-average molecular weight of 50,000 or above by subjecting hydroxycarboxylic acids or oligomers thereof to polycondensation in the presence of aluminum silicate containing aluminum oxide in an amount of 5-40 wt%. This method does not use an organic solvent, but it takes a lot of time to produce polyhydroxycarboxylic acids of high molecular weight.

As described above, none of the prior art teaches a method for producing polyhydroxycarboxylic acids having a weight-average molecular weight of 50,000 or above in high yield in a short time by direct dehydration polycondensation of hydroxycarboxylic acids or oligomers thereof.

### Disclosure of the Invention

The present invention relates to a process for producing polyhydroxycarboxylic acids which comprises subjecting hydroxycarboxylic acids or oligomers thereof to polycondensation in the presence of an inorganic solid acid catalyst and a Lactide.

Further, in accordance with the present invention, polyhydroxycarboxylic acids can be produced in high yield in less time by the use of an inorganic solid acid catalyst in combination with an alkali metal compound catalyst or an alkaline earth metal compound catalyst.

In the present invention, the polyhydroxycarboxylic acids include polymers of hydroxycarboxylic acids and copolymers of polyhydroxycarboxcylic acids.

The hydroxycarboxylic acids suitable for use in the present invention are aliphatic hydroxycarboxylic acids having 2-6 carbon atoms such as lactic acid, glycolic acid, hydroxybutyric acid, and hydroxyvaleric acid, which may be used singly or in combination. The hydroxycarboxylic acids may be in any of the D-, L-, and DL- forms, and may be used in the form of a solid, an aqueous solution, etc. Usually, commercially available 50-90% aqueous solutions are used.

The Lactides suitable for use in the present invention include, for example, lactide and glycolide. As the Lactides, besides commercially available ones, substances mainly comprising Lactides which are formed as by-products in the reaction system for the production of polyhydroxycarboxylic acids may be used. The by-products whose main component is Lactides contain Lactides in an amount of at least 50 wt%, and may also contain straight-chain dimers or straight-chain trimers of hydroxycarboxylic acids.

The Lactide may be introduced into the polycondensation process at any of the following stages.
1) The Lactide is added to an aqueous solution of hydroxycarboxylic acid used as a starting material.
2) The Lactide is added when the molecular weight of oligomer becomes 200-3,000.
3) The Lactide is added when the molecular weight becomes as high as 3,000 or above.

1) Addition of the Lactide to an aqueous solution of hydroxycarboxylic acid as a starting material:
   The by-product whose main component is Lactide which is formed by polycondensation can be recycled by adding it to an aqueous solution of hydroxycarboxylic acid used as a starting material, and as a result, the yield from the hydroxycarboxylic acid can be enhanced.
2) Addition of the Lactide at a time when the molecular weight of oligomer becomes 200-3,000:
   The yield from the hydroxycarboxylic acid as a starting material can be enhanced as well as in the case of 1) above by adding the Lactide at the time when the molecular weight of oligomer becomes 200-3,000. At this stage in the polycondensation process, a large amount of water contained in the hydroxycarboxylic acid has been almost removed, and hence the molecular weight can be increased more efficiently.
3) Addition of the Lactide at the time when the molecular weight becomes as high as 3,000 or above:
   The Lactide added acts as an reactant and shows the effect of enhancing the yield, and the Lactide of low molecular weight acts also as a solvent, thereby lowering the viscosity of the reaction mixture. Further, the Lactide has the effect of enhancing the efficiency of water removal from the reaction system by azeotropic dehydration. In order to maximize the effects of the Lactide at this stage, it is efficient to carry out the reaction under the reflux conditions for the Lactide using a partial condenser. As a result, stirring can be accomplished with lower power, and the efficient dehydration becomes possible under only slightly reduced pressure. Under the same reaction conditions, the molecular weight becomes higher in less time.

The Lactide can be introduced into the polycondensation process by one of the following methods: a method wherein the above commercially available Lactide or the Lactide formed as a by-product in the reaction system and recovered is added to the reaction system; and a method wherein the Lactide formed as a by-product in the reaction system is stored and circulated in the system.

The inorganic solid acid catalysts employed in accordance with the invention are catalysts which are mainly composed of silica or alumina, such as aluminum silicate, silica gel, zeolite, aluminum oxide, magnesium silicate, activated clay, acid clay, aluminum borate, bentonite, kaolin, talc, and silicate. Usually, commercially available ones are used.

The inorganic solid acid catalyst may be added as a solid or as a dispersion in an appropriate solvent such as toluene or xylene, at the start of reaction together with starting materials or in the course of reaction.

The inorganic solid acid catalyst is used in an amount of 0.03-10 wt%, preferably 0.5-7 wt%, more preferably 1-5 wt% based on the amount of a hydroxycarboxylic acid or an oligomer thereof, in one to several portions.

Suitable alkali metal compound catalysts or alkaline earth metal compound catalysts to be used in combination with the inorganic solid acid catalyst include inorganic acid addition salts such as carbonates and bicarbonates, organic acid addition salts such as hydroxycarboxylates (e.g. lactate and glycolate) and acetates, oxides, hydroxides, etc. of alkali metals such as lithium, sodium and potassium, or alkaline earth metals such as magnesium and calcium.

The alkali metal compound catalyst or the alkaline earth metal compound catalyst is added to a reaction mixture in such an amount that the concentration of the alkali metal or the alkaline earth metal eluted in the reaction mixture becomes 10-10,000 ppm, preferably 10-3,000 ppm.

The inorganic solid acid catalyst can be used in combination with the alkali metal compound catalyst or the alkaline earth metal compound catalyst in the following manner.
(1) An inorganic solid acid catalyst is treated with an aqueous solution of an alkali metal compound catalyst or an alkaline earth metal compound catalyst such as carbonate, bicarbonate or hydroxide to obtain an inorganic solid acid catalyst carrying an alkali metal compound catalyst or an alkaline earth metal compound catalyst. The metal elution test is carried out in the same manner as in Example 1 to select those in which metal elution is observed, out of the thus obtained inorganic solid acid catalyst carrying an alkali metal compound catalyst or an alkaline earth metal compound catalyst.
(2) Using an inorganic solid acid catalyst which already carries as a component an alkali metal compound catalyst or an alkaline earth metal compound catalyst, the metal elution test is carried out in the same manner as in Example 1. The inorganic solid acid catalyst having metal elution does not need the treatment mentioned in (1) and can be used as it is. An example of such catalysts is zeolite.
(3) An inorganic solid acid catalyst is added to a raw material solution together with an alkali metal compound catalyst or an alkaline earth metal compound such as carbonate, bicarbonate, hydroxycarboxylate, acetate, hydroxide, or oxide. Alternatively, an alkali metal compound catalyst or an alkaline earth metal compound catalyst such as carbonate, bicarbonate,
hydroxycarboxylate, acetate, hydroxide, or oxide is added to a reaction mixture to which an inorganic solid acid catalyst is added.

The polycondensation reaction is usually carried out at 120-150°C for 5-10 hours at atmospheric pressure in a stream of nitrogen to prepare oligomers. The polycondensation reaction after the preparation of oligomers is carried out at 160-250°C, preferably 180-240°C, more preferably 180-220°C, at 0.05-40 mmHg, preferably 0.1-25 mmHg, for 5-50 hours, preferably 5-30 hours.

In order to efficiently distil away the formed water from the reaction system, azeotropic distillation of water together with the Lactide is preferred. It is preferred to return the distilled Lactide into the reaction system after the removal of water.

The polycondensation reaction of the present invention may be carried out by either continuous operation or batch operation. After the polycondensation reaction is completed, the Lactide remaining in the system is removed using a horizontal biaxial processor, etc.

This step is carried out at 160-250°C, preferably 180-240°C, more preferably 180-220°C, at 0.05-10 mmHg, preferably 0.1-5 mmHg, for 0.2-10 hours, preferably 0.5-3 hours.

In this step, the amount of the remaining Lactide is reduced to a level of 0.5 wt% or below based on the amount of polyhydroxycarboxylic acid.

After the reaction is completed, polyhydroxycarboxylic acid obtained in the molten state is cooled to room temperature to give solidified polyhydroxycarboxylic acid.

The weight-average molecular weight of the polyhydroxycarboxylic acids obtained by the process of the present invention is usually 50,000-300,000, though it varies with the kind of catalysts, reaction temperature, reaction pressure, reaction time, etc.

The process of the present invention is a process for producing polyhydroxycarboxylic acids having a weight-average molecular weight of 50,000 or above easily in high yield in a short time.

The obtained polyhydroxycarboxylic acids usually carry 0.03-10% of an inorganic solid acid catalyst and have high biodegradability.

For the use in drug delivery systems, polyhydroxycarboxylic acids carrying substantially no inorganic solid acid catalyst which can be obtained according to the following procedure are preferable.

Purification can be carried out in the following manner.

A polyhydroxycarboxylic acid carrying an inorganic solid acid catalyst is dissolved in a halogenated hydrocarbon such as chloroform, and the insoluble inorganic solid acid catalyst is removed by filtration. The filtrate is added to a lower alcohol such as isopropanol, and the polyhydroxycarboxylic acid precipitated is separated.

For the use as biodegradable polymers, the polyhydroxycarboxylic acids carrying an inorganic solid acid catalyst or the polyhydroxycarboxylic acids to which an inorganic solid acid catalyst has beed added as a degradation promoter are usually preferable, though the polyhydroxycarboxylic acids carrying substantially no inorganic solid acid catalyst can also be used as biodegradable polymers.

### Best Mode for Carrying Out the Invention

Examples are shown below.

The weight-average molecular weight, the tensile strength, and the elongation percentage of lactic acid polymers were measured in the following manner in Examples.
(1) Measurement of the weight-average molecular weight of lactic acid polymer
   A lactic acid polymer was dissolved in chloroform to prepare a 0.2% solution, and the weight-average molecular weight was measured by gel permeation chromatography (GPG) using standard polystyrene of known molecular weight. As GPC columns, TOSOH G-5000, TOSOH G-3000, and TOSOH G-1000 (TOSOH CORPOPATION) connected in series were used, and the measurement was carried out at a temperature of 40°C.
(2) Measurement of the tensile strength and the elongation percentage of lactic acid polymer
   A lactic acid polymer was dissolved in chloroform to prepare a film (thickness: 50-100 µ) by the casting method. This film was used to prepare No. 2 test pieces in accordance with JISK7127, and the tensile strength and the elongation percentage were measured at a tensile speed of 1 mm/min.

### Example 1

A 90 wt% aqueous solution of L-lactic acid (25 g, 0.25 mol) and 5.38 g of a distillate obtained by polycondensation reaction of lactic acid in the following manner (by-product, main component: lactide)^{*1} were put into a reaction vessel equipped with a stirrer, a Dean-Stark trap, and a nitrogen-introducing tube. After substitution of nitrogen gas was carried out three times, the temperature at the outside of the reaction vessel was raised by 10°C per minute to 150°C, and the mixture was concentrated with stirring for 6 hours in a stream of nitrogen, simultaneously with the removal of the distilled water from the system, to obtain lactic acid oligomer (weight-average molecular weight: 240).

To the obtained oligomer was added 0.4 g of synthetic aluminum silicate with which sodium elution (490 ppm) had been observed by the treatment described below (Tomita Pharmaceutical Co., Ltd.)^{*2}. After the temperature was raised to 200°C and the pressure was reduced gradually to 20 mmHg over 30 minutes, the mixture was stirred at 200 ± 5°C for 3 hours. Then, the pressure was reduced gradually to 1 mmHg over 30 minutes, and the mixture was stirred at 200 ± 5°C for 7 hours and then cooled to room temperature to give 14.6 g of lactic acid polymer as a light brown solid.
Weight-average molecular weigh of lactic acid polymer: 65,000
Yield of lactic acid polymer (based on the lactic acid used as a stating material; the same shall apply hereinafter): 81.1%
Tensile strength : 280 kg/cm²
Elongation percentage : 5%

- ^{*1}: A 90 wt% aqueous solution of L-lactic acid (500 g) was put into a reaction vessel equipped with a stirrer, a Dean-Stark trap, and a nitrogen-introducing tube. After substitution of nitrogen gas was carried out three times, the temperature at the outside of the reaction vessel was raised by 10°C per minute to 150°C, and the solution was concentrated with stirring for 6 hours in a stream of nitrogen, simultaneously with the removal of the distilled water from the system, to give 365 g of lactic acid oligomer (weight-average molecular weight: 235).
To 100 g of the obtained lactic acid oligomer was added 2.0 g of synthetic aluminum silicate with which sodium elution (490 ppm) had been observed (Tomita Pharmaceutical Co., Ltd.). After the temperature was raised to 200°C and the pressure was reduced gradually to 20 mmHg over 30 minutes, the mixture was stirred at 200 ± 5°C for 3 hours. Then, the pressure was reduced gradually to 1 mmHg over 30 minutes, and the mixture was stirred at 200 ± 5°C for 7 hours and then cooled to room temperature to give 59.5 g of lactic acid polymer as a light brown solid. Simultaneously, 32.0 g of a white solid was collected as a distillate (by-product).
According to the analysis by gas chromatography, the white solid comprised mainly lactide and also contained a small amount of straight-chain dimers of lactic acid.
The result of the analysis of the white solid by gas chromatography is shown below as well as the conditions of gas chromatography.

### Analytical values by gas chromatoaraphy

- Lactic acid :: 8%
- Lactide :: 77%
- Lactic acid straight chain-dimers :: 15%

### Gas chromatography conditions

- Column :: CP-Sil18CB (J&W, length: 25 m, inside diameter: 0.25 mm)
- Temperature conditions:: injection temperature; 150°C, detector; 330°C, kept at 80°C for 6 minutes, raised by 5°C/min., and then kept at 300°C for 15 minutes
- Detector:: FID
- Internal standard:: Methyl benzoate

- ^{*2}: To 100 g of lactic acid oligomer was added 2 g of synthetic aluminum silicate, and the mixture was stirred at 80°C for 24 hours in an atmosphere of nitrogen. After addition of chloroform with stirring, the resulting mixture was filtered with a filter paper, followed by filtration using a membrane filter (0.1 µm). After the filtrate was recognized to be transparent with the naked eye, the amount of alkali metal eluted into the filtrate (lactic acid oligomer) was determined by IPC (inductively coupled plasma) [device: UOP-1 MARK-II (Kyoto Koken Co., Ltd.)]. The determination revealed that the filtrate contained 490 ppm sodium. The same treatment was carried out on the filtered synthetic aluminum silicate, and no sodium was detected in the filtrate. Hereinafter, metal elution test on synthetic aluminum silicate was carried out in the same manner.

### Example 2

To a mixture of 14.0 g of the lactic acid oligomer obtained according to the method of note 1 ^{(*1)} of Example 1 (corresponding to 0.192 mol of lactic acid) and 4.48 g of the distillate obtained by the polycondensation reaction of lactic acid (by-product, main component: lactide) was added 0.4 g of synthetic aluminum silicate with which sodium elution (490 ppm) had been observed (Tomita Pharmaceutical Co., Ltd.). After the temperature was raised to 200°C and the pressure was reduced gradually to 20 mmHg over 30 minutes, the mixture was stirred at 200 ± 5°C for 3 hours. Then, the pressure was reduced gradually to 1 mmHg over 30 minutes, and the mixture was stirred at 200 ± 5°C for 7 hours and then cooled to room temperature to give 11.7 g of lactic acid polymer as a light brown solid.
Weight-average molecular weight of lactic acid polymer: 75,000
Yield of lactic acid polymer : 84.6%

### Example 3

To a mixture of 14.0 g of the lactic acid oligomer obtained according to the method of note 1 ^{(*1)} of Example 1 (corresponding to 0.192 mol of lactic acid) and 4 g of lactide (corresponding to 0.056 mol of lactic acid) was added 0.4 g of synthetic aluminum silicate with which sodium elution (490 ppm) had been observed (Tomita Pharmaceutical Co., Ltd.). After the temperature was raised to 200°C and the pressure was reduced gradually to 20 mmHg over 30 minutes, the mixture was stirred at 200 ± 5°C for 3 hours. Then, the pressure was reduced gradually to 1 mmHg over 30 minutes, and the mixture was stirred at 200 ± 5°C for 7 hours and then cooled to room temperature to give 12.1 g of lactic acid polymer as a light brown solid.
Weight-average molecular weight of lactic acid polymer: 74,000
Yield of lactic acid polymer : 87.5%

### Example 4

A 90 wt% aqueous solution of L-lactic acid (1,500 g) was put into a titanium reaction vessel equipped with a stirrer and a nitrogen-introducing tube. This reaction vessel has a volume of 3 L and is equipped with a double helical ribbon impeller, and a partial condenser having a stage efficiency of about 0.5.

After substitution of nitrogen gas was carried out three times, the solution was concentrated with stirring at 150°C for 5 hours in a stream of nitrogen. To the resulting solution was added 30.0 g of synthetic aluminum silicate with which sodium elution (490 ppm) had been observed (Tomita Pharmaceutical Co., Ltd.). After the temperature was raised gradually to 200°C over 2 hours and the pressure was reduced gradually to 1 mmHg, the mixture was stirred at 200 ± 5°C for 20 hours. At this point, the molecular weight of the mixture was 29,000. Then, the pressure was restored to ordinary pressure with nitrogen gas, and 360 g of lactide was added to the mixture. The pressure was again reduced gradually to 15 mmHg, and the mixture was subjected to reaction at 200 ± 5°C for 12 hours. After the pressure was further reduced to 1 mmHg, the lactide was removed at 200°C over 3 hours. The resulting mixture was cooled to room temperature to give 778 g of lactic acid polymer as a light brown solid.
Weight-average molecular weight of lactic acid polymer: 83,000
Yield of lactic acid polymer : 72.0%

### Industrial Applicability

The present invention provides a process for producing polyhydroxycarboxylic acids having a weight-average molecular weight of 50,000 or above in high yield in a short time. The polyhydroxycarboxylic acids are useful as biodegradable plastics for food-wrapping films, beverage bottles, drug delivery systems, etc.

## Claims

1. A process for producing a polyhydroxycarboxylic acid, which comprises subjecting a hydroxycarboxylic acid or an oligomer thereof to polycondensation in the presence of an inorganic solid acid catalyst and a Lactide.

2. A process according to Claim 1, wherein the polycondensation is carried out in the presence of an alkali metal compound catalyst or an alkaline earth metal compound catalyst.

3. A process according to Claim 1 or 2, wherein the inorganic solid acid catalyst is a catalyst which is mainly composed of silica or alumina.

4. A process according to Claim 1 or 2, wherein the inorganic solid acid catalyst is aluminum silicate, silica gel, zeolite, aluminum oxide, magnesium silicate, activated clay, acid clay, aluminum borate, bentonite, kaolin, talc, or silicate.

5. A process according to Claim 2, wherein the alkali metal or the alkaline earth metal in the alkali metal compound catalyst or the alkaline earth metal compound catalyst is eluted in the reaction mixture.

6. A process according to Claim 1, wherein the weight-average molecular weight of the polyhydroxycarboxylic acid is 50,000 or above.

7. A process according to Claim 1, wherein the polyhydroxycarboxylic acid is a polyhydroxycarboxylic acid having a weight-average molecular weight of 50,000 or above and carrying 0.03-10 wt% of an inorganic solid acid catalyst.

8. A process according to Claim 6 or 7, wherein the weight-average molecular weight is 50,000-300,000.
